# EUROPEAN PATENT APPLICATION

(11) **EP 1 594 317 A1**
(43) Date of publication of application: **09.11.2005**
(21) Application number: 05103727.3
(22) Date of filing: 04.05.2005
(51) Int. Cl.: H04N 7/173, G06F 17/30

(54) **Strategies for pausing and resuming the presentation of programs**

(30) Priority: 07.05.2004 US 841123
(71) Applicant: MICROSOFT CORPORATION, Redmond, WA 98053 (US)
(72) Inventor: Carle, Kevin T., Redmond, WA Washington 98052 (US); Scott III, Samuel Thomas, Redmond, WA 98052 (US)
(74) Representative: Zimmer, Franz-Josef

(57) **Abstract**

An operations center stores a plurality of programs, some of which are prerecorded, and some of which are in the process of being recorded. Pause and resumption functionality allows the user to pause the presentation of such programs using different pause modes, and to later resume the presentation of the programs. In a selective pause mode, the user can selectively pause an individual program. This prompts the storage of a bookmark which indicates a pause position in the individual program. In a pause all mode, the user can pause a plurality of programs at the same time. This prompts the storage of a plurality of bookmarks that are associated with the plurality of programs. In a third pause mode, the user can automatically pause a program by the act of switching from that program to another program. This prompts the storage of a bookmark which indicates a position in the program from which the user has switched away.

## Description

### TECHNICAL FIELD

This subject matter relates to strategies for pausing and resuming the presentation of programs, and, in a more particular implementation, to strategies for pausing and resuming the presentation of media programs having audio and/or visual content.

### BACKGROUND

Typical satellite and cable providers of media programs currently offer consumers a great number of programs to select from. For instance, providers commonly offer hundreds of channels to select from, each offering multiple programs. Some of these channels may present pre-recorded media programs (such as movies), viewable at prescribed times or on an on-demand basis. Other of these channels may present live media programs (such as live presentations of sporting or news events).

In a typical viewing session, a user may frequently visit several programs of interest by frequently changing channels. For instance, the provider may offer dozens of live sporting event programs at the same time, and the user may have interest in several of these programs. The user may "surf" between the channels offering these sporting events to simultaneously keep abreast of the progress of each sporting event. However, this approach is not fully satisfactory. For instance, the user may switch to one media program to find that he or she has just missed an interesting play. Further, this channel surfing approach is generally distracting, especially to those who are not in control of the channel controls.

A variety of technologies currently exist to locally record a media program. In this technique, the user can return to parts of a media program that the user may have missed for some reason. However, this approach also is not fully satisfactory. Depending on the technology, the user may be forced to manually re-queue the recording to a desired position. Moreover, the user may have interest in a great number of ongoing programs. The technique of recording only one of these media programs provides at best a partial solution to the user's needs.

More generally, as appreciated by the present inventors, existing media technologies are fundamentally based on a provider-centric approach to the delivery of media programs. In the provider-centric approach, the provider defines the conditions (e.g., the times) at which media programs can be consumed; to receive these programs, the users must therefore adhere to the conditions set by the provider. Local recording of a media program does not fundamentally alter the provider-centric model, as the users are still forced to take burdensome steps to capture an interesting program at a time schedule dictated by the providers.

Accordingly, there is an exemplary need to provide a technique for consuming media programs, and more particularly, including pausing and resuming media programs, that solves at least the above-identified problems.

### SUMMARY

According to one exemplary implementation, a method is described for pausing the presentation of programs. The method includes: (a) storing programs in a content store; (b) receiving a user's instructions to pause plural programs stored in the content store at the same time; (c) creating plural bookmarks, in response to the pause instructions, respectively associated with the plural programs, the plural bookmarks identifying positions in the respective plural programs at which the respective programs are to be paused; and (d) pausing the presentation of the respective plural programs based on the respective plural bookmarks.

According to another exemplary feature, in a "pause all" mode, the above-identified receiving of instructions involves receiving a command to simultaneously pause all of the plural programs at a same position, and the creating of the plural bookmarks involves creating the plural bookmarks to designate the same position for the multiple programs.

According to another feature, in a pause-on-switch mode, the above-identified receiving of instructions involves receiving a series of successive commands to switch among programs being presented on different respective channels, and the creating of the plural bookmarks involves, upon each switch command, creating a bookmark for a program that has been switched away from.

Additional implementations and features will be described in the following.

### BRIEF DESCRIPTION OF THE DRAWINGS

Fig. 1 shows an exemplary system for pausing and resuming programs.

Fig. 2 shows one exemplary implementation of the system of Fig. 1.

Figs. 3-5 show the association of bookmarks with multiple programs stored in a content store maintained by an operations center shown in the system of Fig. 1.

Fig. 6 shows an exemplary remote controller for interacting with the system of Fig. 1.

Figs. 7-10 show exemplary user interface presentations that can be displayed to assist the user in interacting with the system of Fig. 1.

Figs 11-15 show a collection of flowcharts explaining the operation of the system of Fig. 1.

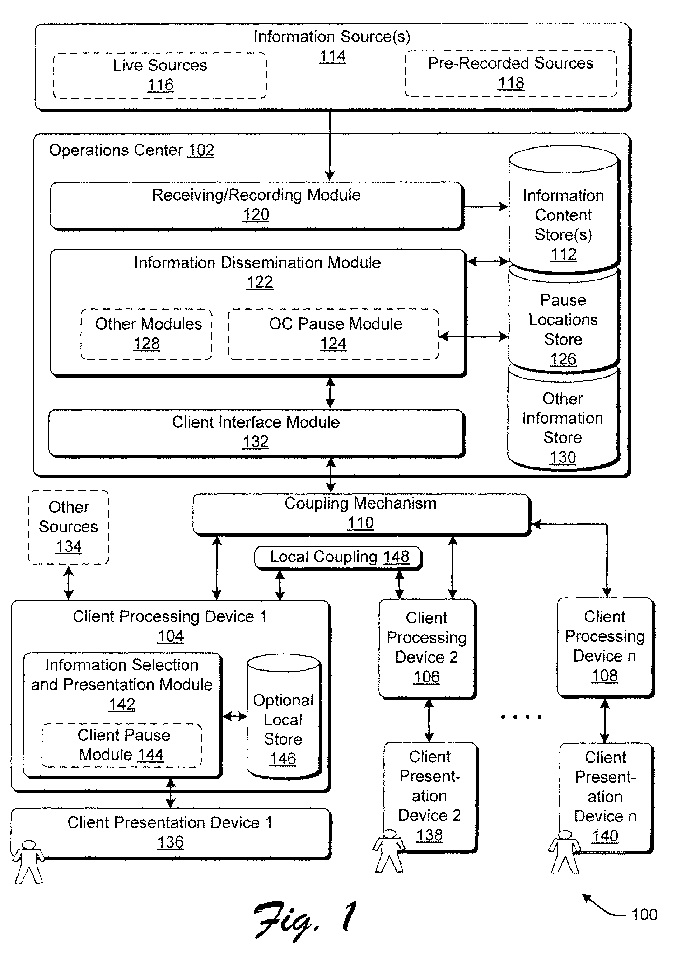

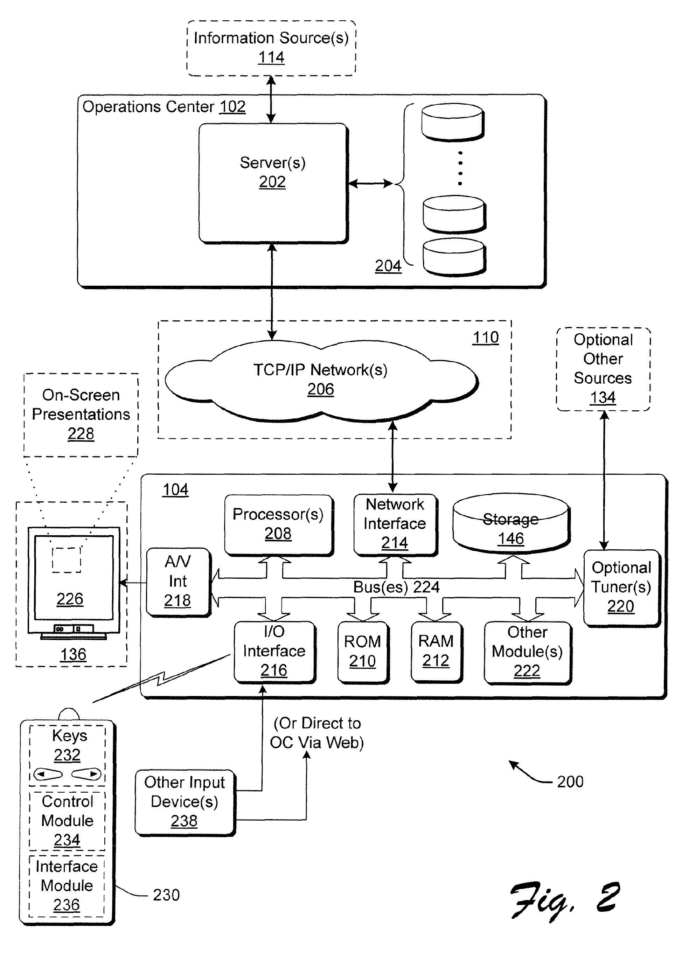

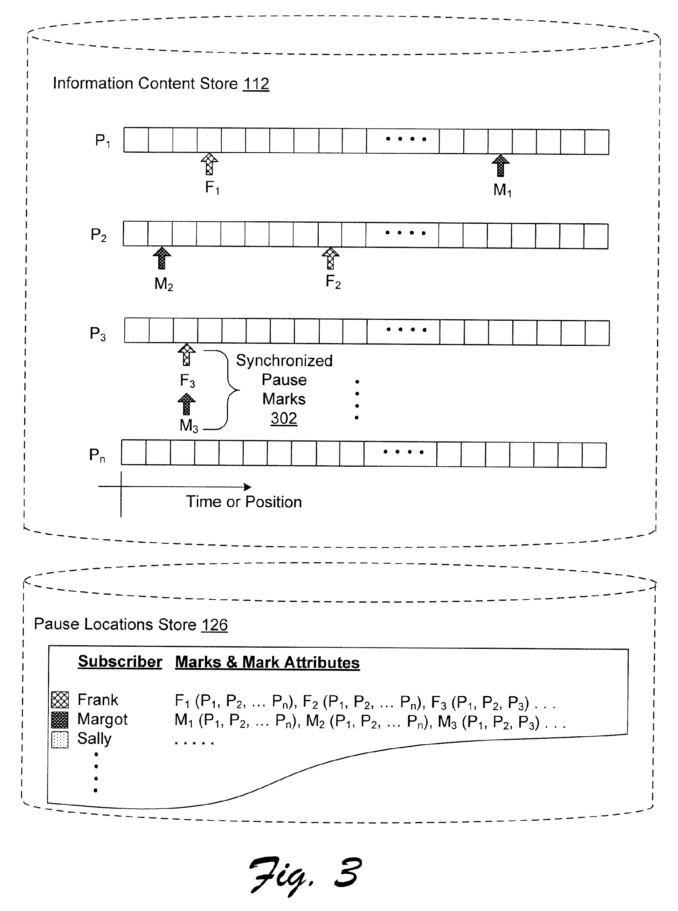

The same numbers are used throughout the disclosure and figures to reference like components and features. Series 100 numbers refer to features originally found in Fig. 1, series 200 numbers refer to features originally found in Fig. 2, series 300 numbers refer to features originally found in Fig. 3, and so on.

### DETAILED DESCRIPTION

Strategies are described herein for pausing and resuming programs. The term "program" refers to any kind of information resources that can be consumed by users. In one case, the programs pertain to audio and/or visual media programs, such as music, still pictures, audio-visual motion pictures, and so on. In the case of audio-visual resources, the programs can pertain to any kind of subject matter, such as serial-type dramas and comedies, documentaries, movies, talk shows, various kinds of sales presentations, news programs, weather information, financial information (e.g., stock information), and so on. In another case, the programs pertain to executable computer programs that allow the user to interact with the programs (such as computer games, etc.). In another case, the programs pertain to markup language resources (such as hypertext markup language resources).

In any of the above cases, the programs can be disseminated in analog or digital format, or a combination of analog and digital formats. Further, the programs can be received in one format and then converted into another format.

In any of the above cases, the programs can pertain to pre-recorded information. The programs can also pertain to "live" information that is being recorded as it is being presented to the user.

This disclosure includes the following sections. Section A describes an exemplary system for implementing pause and resumption functionality. Section B describes exemplary user interface features for allowing a user to interact with the system of Section A. And Section C describes a series of flowcharts which describe the operation of the system of Section A. To facilitate discussion, the implementation most commonly evoked in the following discussion involves the dissemination of audio-visual media programs in streaming digital format over a packet network; however, as noted above, the pause and resumption functionality described herein can be applied to other types of programs in other kinds of technical and commercial environments.

### A. Exemplary System for Implementing the Pausing and Resumption Functionality

### A. 1. System Overview

Fig. 1 shows an exemplary system 100 for implementing the pause and resumption functionality described herein. Generally, any of the functions illustrated in the figures can be implemented using software, firmware (e.g., fixed logic circuitry), manual processing, or a combination of these implementations. The terms "logic," "module" or "functionality" as used herein generally represents software, firmware, or a combination of software and firmware. For instance, in the case of a software implementation, the terms "logic," "module" or "functionality" represents program code that performs specified tasks when executed on a processing device or devices (e.g., CPU or CPUs). The program code can be stored in one or more computer readable memory devices. The illustrated separation of logic, modules and functionality into distinct units may reflect an actual physical grouping and allocation of such software and/or hardware, or can correspond to a conceptual allocation of different tasks performed by a single software program and/or hardware unit. The illustrated logic, modules and functionality can be located at a single site (e.g., as implemented by a processing device), or can be distributed over plural locations.

The system 100 includes an operations center 102 for disseminating programs to a collection of client devices (104, 106, ... 108) via a coupling mechanism 110. Each of the above-identified principal components will be described in turn below.

To begin with, the operations center 102 center can generally represent any infrastructure for storing programs and for distributing the programs to users upon request. In one case, the operations center 102 can be implemented by computing functionality housed at a particular site. In another case, the operations center 102 can be implemented in distributed fashion by computing functionality spread over multiple sites. In one case, a single entity can administer the operations center 102. In another case, multiple entities can collaboratively implement the operations center 102. For instance, in the latter case, plural partners can administer different operation centers which are collectively represented in Fig. 1 as the unified operations center 102. Fig. 2 (to be discussed below in turn) describes one technology-specific implementation of the system 100 shown in Fig. 1.

The operations center includes an information content store 112 for storing the programs. This content store 112 can represent a single database, or can represent multiple distributed databases spread over multiple respective sites. The programs stored in the content store 112 can originate from a number of different sources, generically represented in Fig. 1 as "information sources" 114. The information sources 114 can represent any entity which produces or provides programs, such as conventional commercial cable or satellite television providers, one or more commercial Video-On-Demand (VOD) entities, one or more publishing houses, one or more library sources of programs, any kind of Internet-enabled repository of information, and so on. In one example, an entity that administers the operations center 102 can enter into a contractual arrangement with the entity (or entities) that supply the programs. In another case, the entity that administers the operations center 102 can itself produce at least some of the programs stored in the content store 112.

In any event, the information sources 114 can fall into two principal categories. A first type corresponds to live sources 116. The live sources 116 correspond to sources that supply programs that capture live events, or programs that otherwise have some real-time aspect associated with them. One exemplary live source 116 may correspond to a commercial entity which supplies an audio-visual presentation of a live sporting event. A second type of source corresponds to pre-recorded sources 118. The pre-recorded sources 118 correspond to sources that supply programs that have been already recorded in their entirety.

The operations center 102 includes a receiving/recording module 120 for receiving programs from either the lives sources 116 or the pre-recorded sources 118. In the case of live programs, the receiving/recording module 120 can include functionality for recording these programs in real-time as they are being received, and storing these programs in piecemeal fashion in the content store 112. For pre-recorded programs, the receiving/recording module 120 can transfer the programs *en bloc* to the content store 112. As will be described below, in either the case of live or pre-recorded programs, the receiving/recording module 120 can receive these programs in digital form via a digital network, such as a packet network governed by the Transmission Control Protocol and the Internet Protocol (TCP/IP).

The operations center 102 includes an information dissemination module 122 for providing the programs stored in the store 112 to requesting users. To achieve this end, the dissemination module 112 includes functionality for setting up and administering the accounts of subscribing users, interpreting the requests of users, retrieving programs from the content store 112 based on the users' requests, transmitting the programs to the requesting users, handling appropriate fee collection for the use of the operations center services, and so on.

More specifically, the information dissemination module 122 can apply a unicast model of information distribution in providing programs to users. In this model, the information content store 112 potentially stores a vast number of different programs that the users may select from. Upon a user's request, the dissemination module 122 retrieves a specific program from the store 112 and streams this program to only the requesting user. If the same user requests another program, then the dissemination module 122 can provide this other program to the user.

The unicast mode of information transfer differs from the conventional broadcast mode. In the broadcast mode, a head-end station simultaneously provides a plurality of programs to a large pool of subscribers. The subscribers then locally tune their respective client processing devices to receive one or more programs of interest. In contrast, in the above-described unicast mode of transfer, the operations center 102 does not transfer any information until it is specifically requested by a user. The unicast mode therefore provides an economical point-to-point transfer of information compared to the broadcast mode. Further, in the unicast mode, the operations center can simultaneously stream different parts of the same program to different respective users using potentially different transmission settings (e.g., different transmission rates), thereby allowing greater flexibility in information dissemination compared to the broadcast mode (where all of the subscribers receive the same information at the same time).

The operations center 102 can supply programs to users using different program-packaging paradigms. In one case, the operations center 102 can group programs into different respective "channels," and allow the users to select programs by specifying channel identifiers. A single channel can provide a defined chronological sequence of programs according to the traditional broadcast model of program delivery. In this case, the user can receive a desired program by "tuning" to the channel at a prescribed time. In another case, a single channel can provide a portal that allows the user to select from a subset of programs associated with the channel. In this case, the user can receive a desired program by "tuning" to the channel at any time and selecting one of the programs that the channel offers in an on-demand manner. In still another case, a single channel can be associated with a single program. In this case, the user can receive this program by "tuning" to the channel at any time and selecting this program in an on-demand manner. The above-described information delivery paradigm is advantageous because it conforms to a typical user's prior experience in dealing with the traditional broadcast delivery of programs. That is, the channel paradigm may promote acceptance of the operations center services because the user may feel that he or she is already familiar with its method of operation. However, again, the operations center 102 employs a unicast point-to-point method of delivery, rather than broadcast. Accordingly, any reference to "channel" and "tuning" used herein (which were originally coined in the context of broadcast services) is to be understood as referring to the expanded meaning of these terms as explained above.

Continuing with the explanation of the dissemination module 122, an operations center (OC) pause module 124 represents functionality specifically dedicated to handling requests to pause the presentation of programs and to resume the presentation of previously paused programs. By way of overview, the OC pause module 124 performs this task in the following manner. In one implementation, when a user enters a command to pause the presentation of a particular program, the OC pause module 124 can store a bookmark that identifies the location in the program at which the pause occurred. This bookmark can be stored in a pause location store 126. The OC pause module 124 can also interact with the user's client processing device so that the client processing device exhibits some kind of pause-related behavior. For instance, the OC pause module 124 can prompt the client processing device to present a still frame associated with the paused location in the program. When the user subsequently enters a command to resume the presentation of the program, the OC pause module 124 in conjunction with the user's client processing device can retrieve the bookmark from the pause location store 126 and resume the presentation of the program from the position in the program identified by the bookmark. The above-described behavior applies to a large pool of subscribing users who may be simultaneously engaged in pausing and resuming programs. The pause location store 126 can therefore maintain a large collection of bookmark locations corresponding to respective pause locations created by a large pool of subscribers. All of these bookmarks can make reference to a single set of stored programs, thereby eliminating the need for individual subscribing users to locally maintain copies of programs of interest.

In one implementation, the OC pause module 124, in conjunction with the user's client processing device, can provide multiple selectable pause modes that offer different pause and resumption features. A first pause mode corresponds to the scenario described above. That is, in the first pause mode, the OC pause module 124 enables the user to selectively designate a pause position within the presentation of a program that the user is consuming on a particular channel. The user then remains free to advance to another program on another channel and pause that other program. This mode of pausing also allows the user to return to a previously paused channel and resume the presentation of the program being presented on that channel (that is, by removing the pause state of that presentation). The above-described first pause mode is referred to as the "selective pause" mode.

In a second pause mode, the OC pause module 124 enables the user to enter a command which pauses the presentation of all programs being presented on a plurality of different channels. For instance, the user may subscribe to a set of channels. Some of these channels may be based on a traditional model where the programs are presented according to a fixed time schedule. Or some of these channels may be presenting live events in real-time fashion, such that the delivery of such programs is inherently constrained to a fixed schedule (at least in the sense that the user cannot select parts of the programs that have not yet been recorded). In this kind of environment, the activation of the second pause mode prompts the OC pause module 124 to record multiple bookmarks associated with all of the channels. The multiple bookmarks identify a common time, corresponding to the time when the pause command was issued. Alternatively, the OC pause module 124 can record a single bookmark that globally identifies a common pause location in multiple programs. When the user chooses to resume the programs by entering an appropriate command, the OC pause module 124 can resume the presentation of the programs from the position of the programs indicated by the bookmarks (or by a singular bookmark). Or the user can bring all of the programs up to their current (real-time) playing states by issuing an appropriate command, such as a "go live" command. (However, in general, recall that in a unicast point-to-point model, the operations center 102 does not actually transfer progam content unless the user requests it, e.g., by "tuning" to a channel associated with the program content. All programs can be resumed, as described above, in the sense that these programs are no longer "frozen" when the user requests them by selecting their respective channels.) The above-described second pause mode is referred to as the "pause all" mode because it pauses multiple channels.

In a third pause mode, the OC pause module 124 can be configured to automatically pause a program presented on a first channel when the user switches to another program on another channel. In other words, this pause mode interprets a command to switch channels as an implicit request to pause the program from which the user is switching away. The OC pause module 124 can automatically resume a paused program when the user returns to that program, that is, when the user switches back to the channel that presents the paused program. The above-described third mode is referred to as the automatic "pause-on-switch" mode.

The above described three modes are merely representative. There are multiple ways in which a user can pause programs, and there are multiple ways in which the user can resume previously paused programs. Further, the techniques used to pause programs are not uniquely associated with the techniques used to resume the programs. For instance, for the pause all mode, one technique for globally removing the paused state on each channel is to globally activate a "go live" command. However, it is also possible to allow the user to individually resume selected channels without globally removing the pause state on all of the channels.

Still further details regarding the above-described pause and resumption functionality will be described in Section A.2 below.

In general, the use of the content store 112 in conjunction with the OC pause module 124 provides a consumer-centric mode of program delivery, as opposed to the traditional provider-centric mode of program delivery. The delivery is consumer-centric because the operations center 102 allows the user to consume any program at any time of the user's choosing (providing that the program has been stored in the content store 112). Further, the operations center 102 permits a user to halt the delivery of one or more programs for any reason without missing any program content. In contrast, the traditional provider-centric mode of information delivery requires the user to adhere to the provider's schedule of information delivery in order to receive desired program content.

Other features of the dissemination module 122 are generally represented in Fig. 1 by the module generically labeled "other modules" 128. Other information maintained by the operations center 102 is generally represented in Fig. 1 by the store generically labeled "other information" 130. As the primary focus of this disclosure concerns the pause and resumption functionality, a detailed discussion of such other modules 128 and other information 130 will be omitted here.

The operations center 102 can stream the requested programs to client processing devices (104, 106, ... 108) via a client interface module 132, which couples to the coupling mechanism 110. The coupling mechanism 110 can represent any kind of information transport infrastructure, or any combination of information transport infrastructures. In one case, the coupling mechanism can represent a wide area network (WAN) governed by the TCP/IP protocols (such as the Internet). Such a network can include various hardwired and/or wireless communication links, routers, gateways, name servers, and so on (not shown). Other types of networks can be used besides a TCP/IP WAN, such as an intranet, a LAN network, and so on. The client interface module 132 can be specifically tailored to couple to whatever type of coupling mechanism 110 that the system 100 employs. In the case where the coupling mechanism represents a TCP/IP WAN, the client interface module 132 can be implemented as broadband coupling functionality, modem coupling functionality, DSL coupling functionality, and so on.

The client processing devices (104, 106, ... 108) can be configured to receive streaming or bulk program delivery from the operations center 102 via the coupling mechanism 110. In addition, the client processing devices (104, 106, ... 108) can also be configured to receive programs from other sources besides the operations center 102. Fig. 1 represents this capability by showing the delivery of programs to the client processing devices (104, 106, ... 108) from "other sources" 134. Such other sources 134 may correspond to other operation centers that provide programs in the manner described above, or might correspond to more traditional broadcast sources, such as conventional satellite or cable head-end sources. In one implementation, the pause and resumption functionality can be extended, where possible, to apply to the programs delivered by these other sources 134.

The client processing devices (104, 106, ... 108) themselves can be implemented in different manners to suit different technical and commercial environments. In one case, these client processing devices (104, 106, ... 108) can represent set-top boxes or other application-specific units which couple to client presentation devices (136, 138, ... 140), where the client presentation devices (136, 138, ... 140) can represent televisions, stereo systems, or other kinds of information presentation devices. In an alternative implementation, the client processing devices (104, 106, ... 108) can represent general computer devices which couple to their respective client presentations devices (136, 138, ... 140). In still another example, the client processing devices (104, 106, ... 108) can represent functionality that is integrated into the client presentation devices (136, 138, ... 140) themselves (e.g., in the form of processing boards, detachable cards, etc.).

Fig. 1 shows the exemplary composition of one of the client processing devices, namely client processing device 104. This client processing device 104 includes an information selection and presentation module 142. This module 142 generally represents any functionality that enables the user to enter commands to select a program, present the received program, interact with the presented program, switch between programs, and so on. A client pause module 144 represents the counterpart of the OC pause module 124. The client pause module 144 allows users to enter commands to pause programs and to resume previously paused programs.

Further, the client processing device 104 includes an optional local store 146. The local store 146 can be used to store one or more programs. Also, the local store 146 can be used to store bookmarks that indicate pause positions in the programs (e.g., as a substitute for the storage of such information in the pause location store 126 of the operations center 102, or as a complement to the pause location store 126).

More generally, different aspects of the pause and resumption functionality described above can be allocated to the operations center 102 and the client processing device 104 according to different processing distribution paradigms. In the examples featured above, the operations center 102 maintains all of the programs in its content store 112, thereby eliminating the need for the client processing devices (104, 106, ... 108) to store this content information. But, in another case, the local store 146 can store programs, where these programs can be received from the operations center 102 or through the other sources 134. Further, in the examples featured above, the operations center 102 implements the bulk of the pause and resumption functionality, requiring the client processing devices (104, 106, ... 108) to only supply the appropriate pause and resumption commands, and to respond properly to whatever pause and resumption instructions that the operations center 102 in turn issues. But, in another case, the client processing devices (104, 106, ... 108) can take a more active role in implementing these tasks, for instance, by storing the bookmarks locally and managing these bookmarks locally. In this case, the client processing devices (104, 106, ... 108) can transmit locally stored bookmarks to the operations center 102, where the OC pause module 124 coordinates the resumption of programs stored in the content store 112 based on the supplied bookmarks.

Indeed, in one case, the pause and resumption functionality can be implemented in a local mode without any interaction from the operations center 102. In this case, the client processing device 104 can store its own cache of programs (e.g., using a video jukebox arrangement), and also store and interact with any bookmarks entered by the user.

Since the pause and resumption functionality can be implemented in different ways, in the ensuing discussion, a general reference to the "pause module (124, 144)" without the modifier "OC" or "client" can refer to any kind of distribution of tasks between the OC pause module 124 and the client pause module 144.

Finally, one or more of the client processing devices (104, 106, ... 108) can be coupled together via a local coupling mechanism of any kind, such as an intranet, Universal Plug and Play (UPnP) network, a LAN, and so on. For instance, in Fig. 1, a local coupling mechanism 148 couples together client processing device 104 and client processing device 106.

Fig. 2 provides further details regarding one exemplary implementation 200 of the system 100 shown in Fig. 1. In Fig. 2, the operations center 102 can be implemented as one or more computer servers, such as a farm of computer servers. A computer server refers to a computer device that is configured to provide a service to requesting client processing devices. Although not shown, a computer server can include one or more processors (e.g., CPUs), random access memory (RAM), read only memory (ROM), various media storage drives, various network interface functionality, various input and output devices, various internal coupling mechanisms (such as buses), and so on. The operations center 202 can dedicate different servers 202 to handling different functions provided by the operations center 102, such as administrative tasks, receiving/recording tasks, program dissemination tasks, and so on. The operations center 202 can alternatively, or in addition, allocate plural servers 202 to performing the same tasks using various load balancing algorithms to meet client demand for services. As mentioned above, the functionality associated with the operations center 102 can be implemented at a single site or distributed over plural sites.

The information content store 112, pause location store 126 and other information store 130 shown in Fig. 1 can be implemented by the collection of data stores 204 shown in Fig. 2. These data stores 204 can represent any kind of magnetic storage media, optical storage media, solid state type storage media, or other kind of storage media. The data stores 204 can be maintained using any kind of database management technology. The data stores 204 can be implemented at a single site or distributed over plural sites.

As noted above, in one exemplary implementation, the coupling mechanism 110 can be implemented as a TCP/IP WAN network 206, such as the Internet, an intranet, or some combination thereof.

As noted above, the computer processing device 104 itself can be implemented as a set-top box or other application-specific unit (such as a game console, e.g., the Xbox™ game console produced by Microsoft Corporation of Redmond, Washington), a general purpose computer device, functionality integrated with the client presentation device 136 itself, or other implementation. In any case, the client processing device can include one or more processors 208 for executing machine readable code, ROM memory 210 and RAM memory 212 for storing machine readable code and other data, a network interface 214 for interacting with the operations center 102 via the TCP/IP network 206, local storage 146, an I/O interface 216 for interacting with one or more user input devices, an audio-visual (A/V) interface 218 for interacting with the client presentation device 136, one or more optional tuners 220 for receiving conventional broadcast programs from the other sources 134, and various other modules 222. One or more busses 224 couple all of the above-identified components together and coordinate their cooperation.

The client presentation device 136 is shown Fig. 2 as a television 226, although the client presentation device 136 could also be implemented as a stereo output system, other some other kind of media output device. In other cases, the client presentation device 136 can represent a combination of different output devices working in cooperation to present media programs. The client processing device 104 can be configured to present one or more on-screen user interface presentations 228 to assist the user in interacting with the services provided by the operations center 102.

A remote controller 230 serves as one possible input device. A user can use the remote controller 230 to select programs, to pause programs, to resume previously paused programs, and for performing other tasks. As generally shown in Fig. 2, the remote controller 230 includes a collection of keys 232, a control module 234 for processing the user's actuation of the keys 232 to provide user instructions, and an interface module 236 for transmitting the user's instructions to the client processing device 104 via wireless communication (e.g., infrared communication).

A number of other input devices 238 can be used to interact with the services provided by the operations center 102, in addition to, or as substitute for, the remote controller 230. For example, the other input devices 238 can represent a keyboard, a mouse-type input device, a joystick, and so on. Alternatively, a user can user a separate computer device (such as a general purpose computer, a laptop computer, etc.) to enter commands to the operations center 102 and to receive feedback from the operations center 102, to thereby control the presentation of programs on the client presentation device 136. This functionality can be achieved by coupling the separate computer device directly to the client processing device 104; this enables the client processing device 104 to directly receive commands from the separate computer device. Alternatively, this functionality can be achieved by coupling the separate computer device directly to the operations center 102 via the TCP/IP WAN network 206; in this case, the operations center 102 can forward the user's commands back down to the client processing device 104 to thereby control the presentation of programs on the client presentation device 136.

The implementation 200 is only exemplary; the system 100 shown in Fig. 1 can be implemented in other kinds of technical and commercial environments besides that shown in Fig. 2.

### A.2. Pause and Resumption Functionality

Figs. 3-5 illustrate the behavior of the pause module (124, 144) in greater detail. To facilitate discussion, the implementation shown in Figs. 3-5 corresponds to the case where the operations center 102 stores both the programs in the information store 112 and the bookmarks in the pause location store 126. However, the programs can be alternatively, or in addition, stored in the local stores of the client processing devices (104, 106, ... 108) (such as the local store 146 of client processing device 104). Also, the bookmarks can be alternatively, or in addition, stored and managed in the local stores of the client processing devices (104, 106, ... 108).

To begin with, Fig. 3 indicates that the content store 112 stores a plurality of programs (P₁-Pₙ). While such programs may be a combination of both pre-recorded programs and live programs, Fig. 3 shows a simplified case in which all of the programs (P₁-Pₙ) correspond to pre-recorded programs, such as a collection of pre-recorded movies or television programs. The contents of the programs (P₁-Pₙ) are depicted as respective streams of information to conceptually illustrate the temporal manner in which these programs can be distributed and consumed by users.

The pause locations store 126 stores a plurality of bookmarks that reflect pause positions within the programs (P₁-Pₙ). More specifically, the pause locations store 126 can store a set of bookmarks created by each of the subscribing users, such as the representative users Frank, Margot and Sally shown in Fig. 3. That is, Fig. 3 represents the bookmarks associated with the subscriber Frank as F₁, F₂, F₃, etc, and bookmarks associated with subscriber Margot as M₁, M₂, M₃, etc., and so on. As will be described below, bookmarks can be associated with users by directly associating specific subscriber information with the bookmarks. Alternatively, bookmarks can be associated directly with client processing devices used to create the bookmarks, and thus indirectly associated with the subscribers who interact with these client processing devices. Any reference to bookmarks below encompasses both of these scenarios, as well as additional scenarios.

A bookmark can identify a position within a program in different ways. In one technique, a bookmark can represent an absolute time, such as 7:32:43 PM PST, March 14, 2007. This bookmark format can be used to designate locations within a program that is presented at a well-defined scheduled time, so that the specification of an absolute time can be correlated with a specific position within the progam. Alternatively, the bookmark can be expressed as an offset position relative to the start of the program, or relative to some other reference point. For instance, a bookmark defined as 1:17:34 can represent a location that is 1 hour, 17 minutes and 34 seconds into the presentation of the program. Alternatively, such an offset can be expressed by specifying a frame number or some other relative measure that identifies a position within the program.

The location store 126 can also store a number of attributes associated with each boakmark. For instance, as depicted in Fig. 3, each of the bookmarks has a plurality of attributes associated therewith denoted by P₁, P₂, P₃, etc. For instance, one attribute can indicate whether the associated bookmark applies to only one specific client processing device, or whether the bookmark applies to all client processing devices associated with the user (or some subset thereof). In former case, for example, a user could define a bookmark on a client processing device in the user's living room, yet this bookmark would not be applicable to another client processing device in the user's bedroom. In the latter case, the bookmark would apply to the bedroom device.

Additional kinds of attributes can be defined to govern the behavior of the bookmarks. For instance, an attribute can be defined that determines whether a bookmark is exclusively associated with a particular member of the household, as opposed to any member of the household. Another attribute can be defined which governs the permanence of the bookmark. In this case, bookmarks of a first class can pertain to significant or interesting events that the user wishes to permanently memorialize. Bookmarks of a second class can pertain to mere pause positions created by users who wish to pause programs for commonplace utilitarian reasons (e.g., to allow the users to attend to errands, etc.). The pause module (124, 144) can be configured to automatically remove both the first class and the second class of bookmarks after a predetermined amount of time; but it can be configured to remove the second class sooner than it removes the first class of bookmarks. Alternatively, the pause module (124, 144) can be configured so that it does not automatically remove either class of bookmarks; in this case, the pause module (124, 144) can require the user to take express steps to delete these bookmarks. In still another case, the pause module (124, 144) can be configured to automatically remove the second class, but not the first class of bookmarks; in this case, the pause module (124, 144) can require the user to take express steps to delete the first class of bookmarks.

As will be described in the next section, the system 100 can provide different user interface techniques for defining the above-described attributes.

Further, although not illustrated, the system 100 can include user interface functionality which allows users to associate meaningful descriptors with bookmarks to assist the user in activating desired bookmarks at a later time. For instance, suppose that a user marked a series of homeruns hit by a certain baseball player in different baseball games. The system 100 can include interface functionality that allows the user to attach meaningful labels to these bookmarks, such as "Sosa: 2004-03-02" for one of the bookmarks. The system 100 can further include appropriate interface functionality for listing the bookmarks and associated labels and allowing the user to activate one or more bookmarks via this user interface functionality.

Fig. 3 shows the manner in which the bookmarks created by two users (Frank and Margot) correspond to different positions within the paused programs (P₁-Pₙ). Note that the operations center 102 can maintain a single copy of the programs and that multiple users can create bookmarks with respect to that single copy. Generally, as the users are normally acting independently of each other, the bookmarks created by different users cannot be expected to coincide in time or position. However, as indicated by the pair of marks 302, the pause module (124, 144) provides functionality that allows two or more users to establish bookmarks which indicate the same position within a program. This might be useful where one user wishes to draw another user's attention to a particular part of a program for any reason (e.g., to point out a particularly exciting event in a televised game). The system 100 can achieve such synchronization in different ways, such as by defining friend affiliations between users which allows these users to view each other's bookmarks and to copy one or more of their friend's bookmarks into their own personal cache of bookmarks. Or the system 100 can allow a first user to send a message to a second user which informs the second user that the first user has created bookmarks that the second user may wish to store in his or her own personal cache of bookmarks; this mode does not presume any pre-existing friend-relationship between sharing users.

Again, the above discussion pertains to the case where the operations center 102 stores and manages the bookmarks entered by several users. However, the functions described above can be implemented in a local context. In a first case, an individual client processing device, such as device 104, can store and manage bookmarks for anyone in a household that uses the client processing device 104 (or in other local settings, such as a business, academic institution, or government building, etc.). The bookmarks can be stored in the local store 146 and managed by the client pause module 144. The bookmarks can include information which links the bookmarks to associated programs stored in the content store 112 in the operations center 102. In operation, the client pause module 144 can forward stored bookmarks to the OC pause module 124 to instruct the OC pause module 124 to resume one or more previously paused programs stored in the content store 112. (Alternatively, the programs can be stored in the local store 146, or parts thereof can be stored in the local store 146, thereby eliminating the need to communicate with the operations center 102).

In other cases, a local setting, such as a household, can include a local network 148, and that local network 148 can couple together multiple client processing devices, such as a first client processing device 104 in a living room of a house, and a second client processing device 106 in the bedroom of the house. In one implementation, one of these client processing devices (106, 108) can serve as a master or a host, centrally storing and managing bookmarks input via any client processing device coupled to the local network 110. Or the master or host client processing device can dictate the bookmarks that are available to all of the other processing devices in the household (so that all of the other devices have bookmarks which are "synchronized" with the host device's bookmarks). In another case, the last device to be used can perform the function of storing and managing the repository of bookmarks for all the other devices in the household. Or the last used client processing device can dictate the bookmarks that are available to all of the other processing devices in the household. In yet another case, each device in the household can act autonomously to store and manage its own bookmarks. Still further storage and management techniques can be used. (All of the above home networking arrangements can also be achieved by storing bookmarks at the operations center 102, rather than locally.)

In any of the above cases, including the cases in which the operations center 102 stores and manages the bookmarks, bookmarks from individual users can be distinguished from each other in different ways. In one case, the client processing device that creates a bookmark can append a code to it which identifies the originating client processing device. This can fairly reasonably pinpoint a user or class of users who create the bookmarks insofar as these users routinely use this device. The code can alternatively identify only a household from which bookmarks originated, which may include multiple client processing devices. In another case, the client processing device may require its users to "log in" at the start of any viewing session by providing user identifying information. This identifying information can then be appended to any bookmark that is created by the client processing device. In yet another case, the client processing device can allow users to enter identifying information on a bookmark-by-bookmark basis, e.g., by providing an appropriate user interface presentation that allows the users to enter identifying information upon each creation of a bookmark.

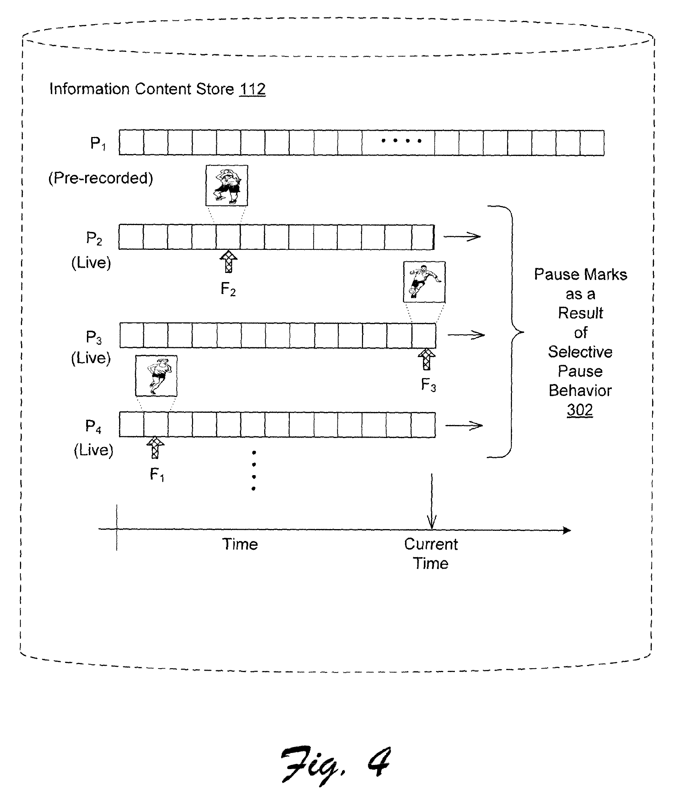

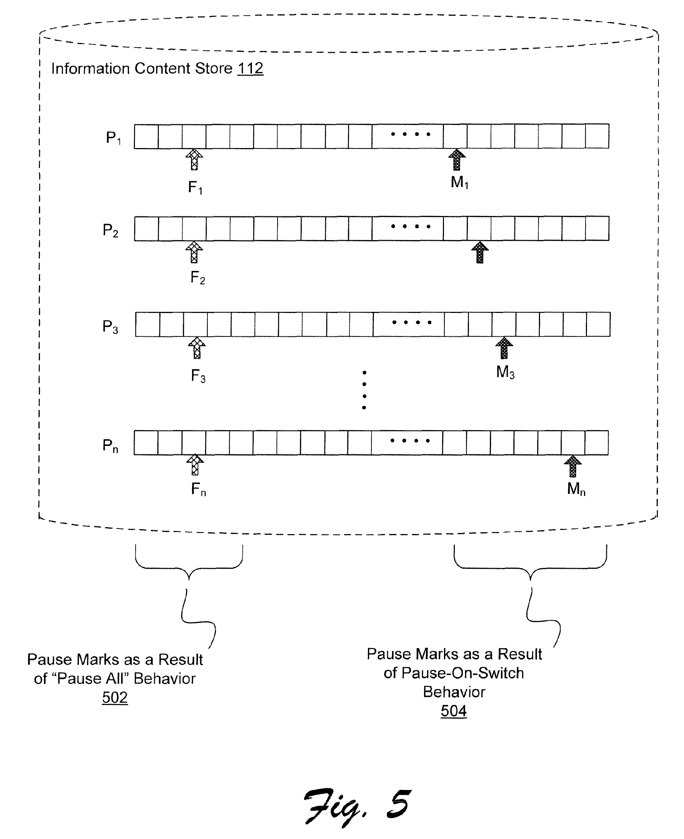

Continuing on, Figs. 4 and 5 show specific bookmarking scenarios corresponding to the above-described three pause modes (in the exemplary and non-limiting case in which the bookmarks are stored and managed at the operations center 102). Fig. 4, for instance, illustrates the behavior of the selective pause mode which enables a user to selectively pause an individual program and to later resume that individual program. Fig. 4 particularly illustrates the selective pause mode in the context of the simultaneous presentation of three live programs (P₂, P₃, P₄). For example, these programs (P₂, P₃, P₄) can correspond to three respective live sporting events. For live programs, the receiving/recording module 120 (of Fig. 1) can record the programs as they are being received from the live sources 116. Thus, the user can access any prior position within these programs that has been recorded in the content store 112, but, naturally, the user cannot access a position that has not yet occurred, and therefore has not yet been recorded. The vertical arrow positioned along the timeline in Fig. 3 indicates an exemplary current time, beyond which no live program content has yet been received by the operations center 102.

In the specific example illustrated in Fig. 3, assume that the user (Frank) first issues a pause command while watching program P₄ to thereby create a first bookmark F₁. Then presume that the user Frank switches to program P₂ (another live program), and issues another pause command at a later time with respect to this program P₂ to create a second bookmark F₂. Then presume that the user Frank switches to program P₃ and issues another pause command at a still later time with respect to this program P₃ to create a third bookmark F₃. Because all three of the live programs (P₂, P₃, P₄) are being recorded as they are being received, the pause module (124, 144) allows the user to return to prior bookmarked points in the presentation of these programs and resume the programs from the positions of the bookmarks. For instance, if the user Frank returns to program P₂ he is presented with the still frame associated with the bookmark F₂; the user Frank can then proceed to resume the program P₂ from that juncture onward. This ensures that the user will not miss any program content in the course of switching among programs (P₂, P₃, P₄). The user can resume the programs by issuing resumption commands (to be described below).

Fig. 5 illustrates the "pause all" mode, as executed by the user Frank, and the pause-on-switch mode, as executed by the user Margot. Starting with the pause all mode behavior 502, the user Frank may subscribe to all of the channels that are respectively presenting the programs (P₁-Pₙ). When the user Frank activates a pause all command (in the manner to be described below), the pause module (124, 144) creates multiple bookmarks pointing to the same temporal position in the programs (P₁-Pₙ). For example, assume that the user Frank desires to watch one of three different news programs that are being represented at the same time according to fixed schedules, but he is uncertain which one he wants to view. Further presume that, as the user Frank is about to make a decision, he is interrupted by a telephone call. To address this situation, the user Frank can activate the pause all command to freeze all of the news programs. This would ensure that the user Frank does not miss any program content on any of the news programs. Further, while the channels are subject to the pause all state, the user Frank can surf among these channels to view still frames associated with the bookmarked program positions of these channels. The user Frank can remove the pause all state by activating an appropriate command, which can prompt the pause module (124, 144) to resume the paused programs from the common point at which they were paused. Alternatively, the user Frank can start viewing all of the programs at their current (i.e., real-time) positions by pressing an appropriate command, such as a "go live" command.

In the switch-on-pause behavior 504, the user Margot has activated an appropriate command which prompts the pause module (124, 144) to enter a switch-on-pause mode of operation. In this mode, the pause module (124, 144) will automatically pause a program being presented on a particular channel when the user Margot switches to another program being presented on another channel. In this example, presume that the user Margot rapidly switches from program P₁ to program P₂, from program P₂ to program P3, and so forth. This creates the temporally staggered arrangement of bookmarks shown in Fig. 5. The user Margot can automatically resume a paused program by simply returning to a paused channel. Alternatively, the pause module (124, 144) can be configured to require the user Margot to take some active and affirmative step to remove the pause state of a paused program, such as by entering a resumption command, a "go live" command, and so forth.

Finally, the existence of a centrally maintained pause locations store 126 has a number of uses above and beyond its everyday use by subscribing users. For instance, information regarding a user population's viewing habits can be gleaned from the pause locations store 126. A human analyst or automated analysis tool can examine the pause locations store 126 to extract significant information therefrom. Such information can be used to improve the media program content delivered to the users and, if so authorized, to make marketing decisions and the like.

### B. Exemplary User Interface Functionality

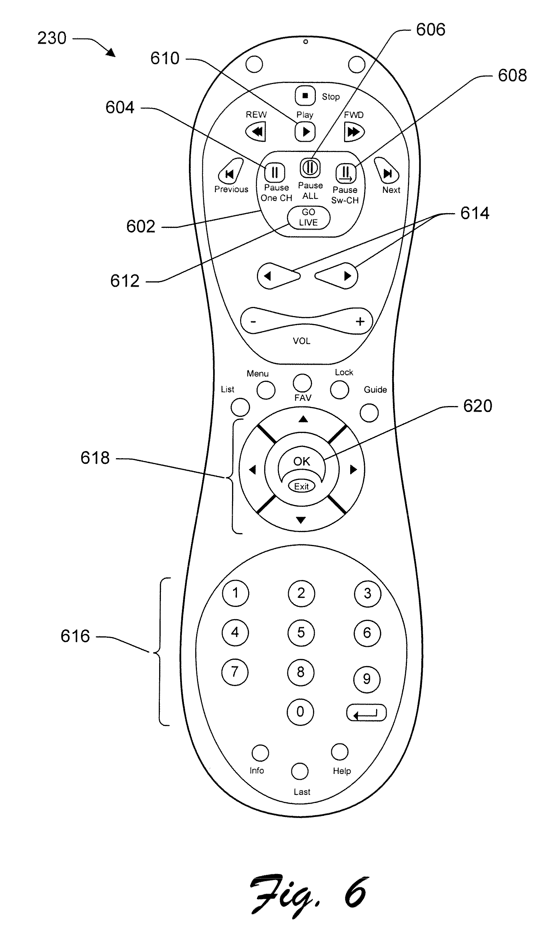

Figs. 6-9 shows various mechanism that can be used to pause programs, resume paused programs, bring paused programs up to date, define the behavior of the pause/resumption functionality, and inspect the results of the pause/resumption functionality. In general, these tasks can be performed by specific input keys disposed on an input device (such as the remote controller 230), or by user interface presentations 228 displayed on a client presentation device (such as television 226) or some other device (such as the display monitor of a separate computer device), or by some combination of input keys and user interface presentations 228. The implementations described in the following are representative and exemplary strategies for allowing users to interact with the system 100.

### B.1. Exemplary Remote Control Features

Fig. 6 provides a more detailed illustration of the exemplary remote control 136 shown in Fig. 2. Of particular note here is the collection 602 of pausing and resumption keys that can be used to enter commands to pause programs and/or to resume the presentation of previously paused programs. The top three keys (604, 606, 608) in this collection 602 correspond to the three pause modes defined above. Namely, a selective pause key 604 prompts the pause module (124, 144) to pause a particular program that the user happens to be viewing on a particular channel (without affecting the presentation of other programs on other channels). The pause module (124, 144) responds by freezing the frame of the program that was being presented when the user pressed this key 604. The user can resume the paused program in various ways, such as by pressing the selective pause key 604 again while "tuned" to the channel that has been paused, or by pressing a play key 610 while "tuned" to this channel. Alternatively, if the user wishes to bring the paused program entirely up to date, then the user can activate a "go live" key 612 (assuming that the program is being delivered according to a fixed time schedule, and thus the concept of "current time" has meaning in this context).

A pause all key 606 prompts the pause module (124, 144) to pause all of the programs presented on the channels which the user has subscribed to or otherwise has access to. Thus, if the user subscribes to two channels that are simultaneously presenting live events, pressing the pause all key 606 will prompt the pause module (124, 144) to pause both of these live programs at the same time. The pause module (124, 144) responds to the pause all key 606 by presenting still frames for each of the paused programs that correspond to frames associated with the paused positions in each of the programs. The user can resume channels that that have been paused using the pause all key 606 in different ways, such as by pressing the pause all key 606 again; this prompts the pause module (124, 144) to resume all of the paused programs from the respective positions at which they were paused. Alternatively, if the user wishes to bring the paused programs entirely up to date, then the user can activate the "go live" key 612. Still alternatively, the user can selectively resume only some of the paused programs by pressing the selective pause key 604 or the play key 610 when tuned to these selected programs.

Activation of a pause-on-switch key 608 enables the pause-on-switch mode of pausing channels. In this mode, the pause module (124, 144) automatically pauses a program being presented on a channel when the user switches away from this channel to view another program on another channel. The pause module (124, 144) responds to channel activation in this mode by presenting a still frame corresponding to the frame of the program that was being presented when the user switched away from the program. A program that has been paused in this mode can be resumed by pressing the selective pause key 604 or the play key 610 when "tuned" to the paused program, or by bringing all of the paused channels up to date by pressing the go live key 612. Channel switching itself can be performed by activating channel up/down keys 614 or by entering specific channel numbers through numeric keys 616. The pause-on-switch key 608 can be pressed again to de-activate the pause-on-switch mode of operation.

Yet further key functionality can be incorporated into the remote controller 230. According to one feature, the pause keys (604, 606) can each create two kinds of bookmarks. For example, the first kind of bookmark can be created by only briefly depressing the keys (604, 606). A second kind of bookmark can be created by holding down the keys (604, 606) for a more lengthy period of time, such as two or three seconds. The first kind of bookmark can designate a pause position that is automatically removed after a prescribed period of time. The second kind of bookmark can designate a pause position that is retained for a longer period of time compared to the first kind of bookmark (and can be potentially indefinitely retained). The second kind of bookmark can represent positions in the programs that are of particular interest to the user, rather than pause positions that have been created in the ordinary use of the system 100 for utilitarian reasons.

The above-identified key selection, layout and behavior are exemplary. For instance, instead of allocating separate keys to the three pause modes, the system 100 can display various user interface presentations 228 that allow the users to make pause mode selections. The users can navigate within these user interface presentations using up/down and left/right navigation keys 618, and then select options using an OK button 620, or the equivalent.

### B.2. Exemplary User Interface Presentation Features

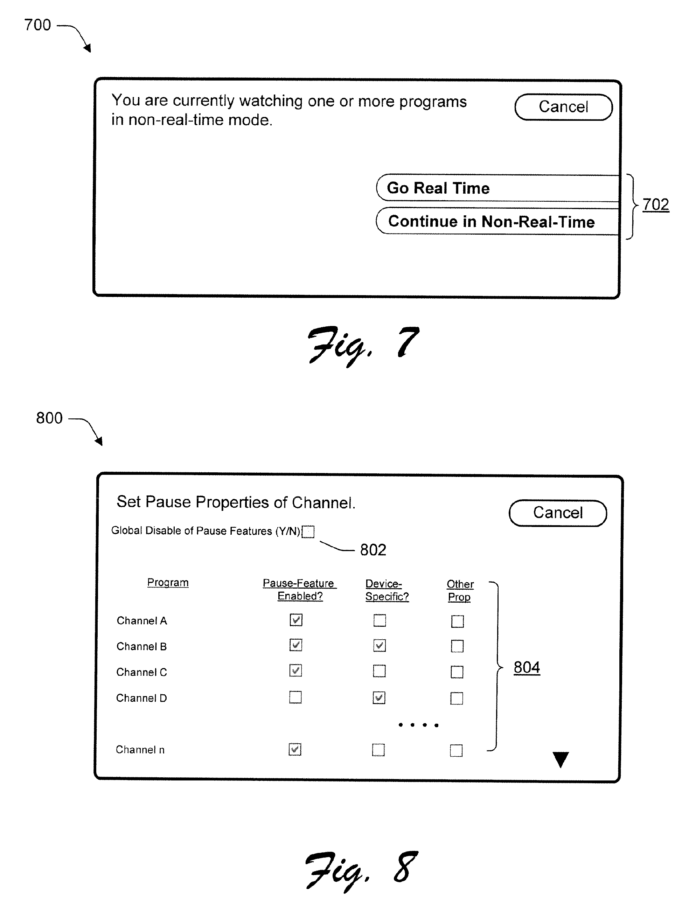

Fig. 7 shows a user interface presentation 700 that illustrates the statement made above, namely, that user interface presentations can be used to replace or to supplement the use of specially allocated pause keys on the remote controller 230. In the case of Fig. 7, a user interface presentation 700 alerts the user to the fact that one or more programs are currently being presented in a non-real-time mode (e.g., in a delayed mode), which could indicate that the user has paused one or more live programs and has later resumed these programs from bookmarked positions in these programs to provide time-delayed presentations of these programs. The entry field 702 gives the user the option of bringing the presentations of the paused programs up to date so that they are presented in real-time (e.g., in the case of a sporting event, substantially concurrently with the event itself). Or the entry field 702 allows the user to continue watching the programs in a time-delayed state. The user interface presentation 700 can therefore be used to replace the "go live" key 612 disposed on the remote controller 230, or to supplement this key 612 by providing an alternative way of allowing the user to enter a go live command.

Fig. 8 shows an exemplary user interface presentation 800 that allows a user to define the behavior of the pause and resumption functionality. A first entry field 802 in this presentation 800 allows the user to globally enable or disable the pause and resumption functionality described above. For instance, a user may wish to consume programs in a traditional manner, that is, without pausing any programs or consuming any programs in time-delayed fashion; this can be achieved by activating the user entry field 802 (e.g., by entering a check in the check box of this field 802).

A second series of entry fields 804 allows a user to define pause and resumption behavior on a channel by channel basis. For instance, a first column of these entry fields 804 allows the user to define whether the pause and resumption functionality is to be enabled or disabled on a channel by channel basis. Accordingly, if the user subsequently issues a pause all command, this command will only apply to those channels that have been checked in the first column of entry fields 804.

A second column of the entry fields 804 allows the user to specify, on a channel by channel basis, whether the pause and resumption functionality applies locally to only the client processing device through which a pause command was issued, or more globally to all client processing devices associated with the user (such as all of the client processing devices in the user's household or households). Although not shown, this device-related attribute can also be defined on a global scale in the manner of user entry field 802 (in which case a user's single selection will apply to all of the channels).

Still other kinds of bookmark attributes can be defined in the above-described manner, as generically indicated in Fig. 8 by the label "other prop" in the last column of the entry fields 804.

Fig. 9 shows a user interface presentation 900 which presents thumbnail depictions of frames of respective programs. These frames correspond to respective pause positions in the programs. For instance, the pause positions shown in the user interface presentation 900 can represent the result of the user issuing a pause all command, which prompts the pause module (124, 144) to simultaneously pause all of the programs that are currently being presented on all of the channels. The system 100 can be configured to allow the user to navigate to any paused channel by selecting one of the thumbnail depictions, e.g., using the navigation keys (618, 620) of the remote controller 230 to navigate over the user interface presentation 900.

There is a chance that the position at which a program has been paused corresponds to a frame that does not provide meaningful information. For instance, a paused position may lie within a brief time segment prior to a commercial where only a blackened field is presented. To prevent the display of a thumbnail having no meaningful content, the pause module (124, 144) can be configured to analyze the program content associated with a pause location to ensure that it yields meaningful content. This can be achieved by determining whether the output of a suitably configured image filter is above a prescribed threshold. Or this can be achieved in a more advanced implementation by using various kinds of feature extraction and analysis algorithms, and so forth. If a frame is assessed to have low information content, then the pause module (124, 144) can be configured to successively move ahead or back in the program relative to the paused position until the pause module (124, 144) finds a frame that presents satisfactory information.

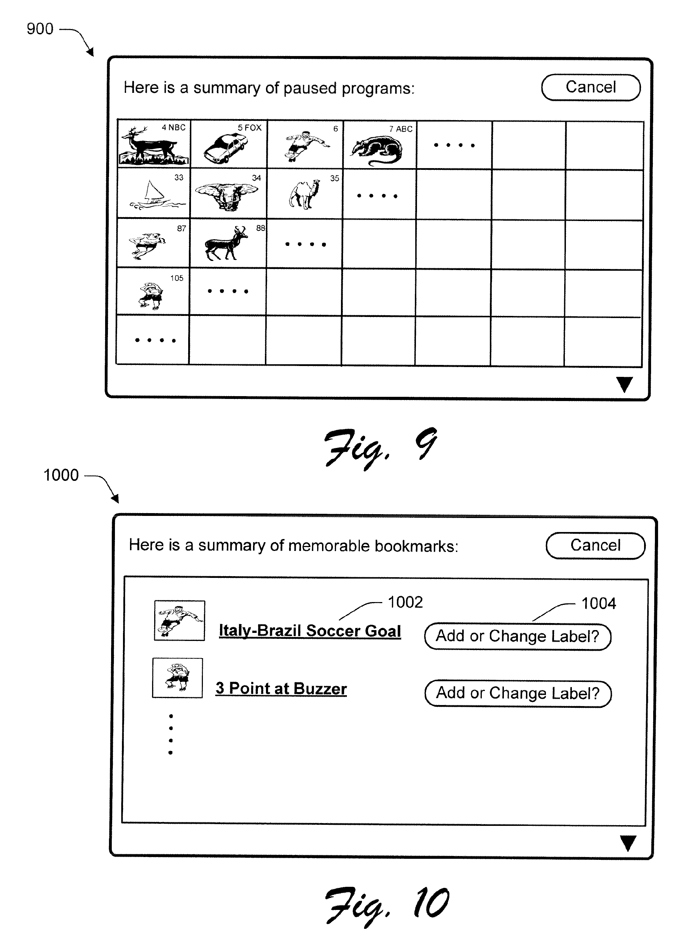

Finally, Fig. 10 shows a user interface presentation 1000 that presents a summary of memorable bookmarks entered by a particular user. Each bookmark can include a thumbnail depiction of the frame associated with a bookmark location, an optional label assigned to the bookmark (e.g., label 1002), and a command button (e.g., button 1004) for allowing the user to create or modify the label. The user can advance to the pause position designated by a bookmark by selecting the bookmark label 1002, or through other interface navigation mechanism.

In each of the above cases, the user can interact with the user interface presentations by any kind of navigation and selection keys provided by the remote controller (such as keys 618 and 620), or through other input means, such as via a separate computer device coupled to the operations center 102.

### C. Exemplary Method of Operation

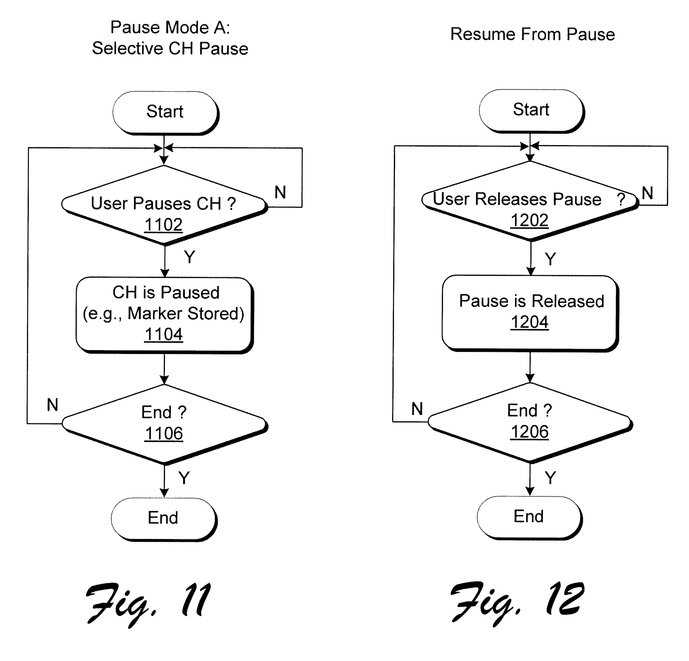

Figs. 11-16 describe the operation of the system 100 of Fig. 1 in flow chart form. To facilitate discussion, certain operations are described as constituting distinct steps performed in a certain order. Such implementations are exemplary and non-limiting. Certain steps described herein can be grouped together and performed in a single operation, and certain steps can be performed in an order that differs from the order employed in the examples set forth in this disclosure.

### C.1. Selective Pause Mode

Figs. 11 and 12 show the behavior of the selective pause mode from the standpoint of the user's experience in interacting with the client processing device 104. In particular, Fig. 11 shows what happens when the user issues a pause command for a particular channel, while Fig. 12 shows what happens when the user removes the pause state from this channel.

In step 1102 of Fig. 11, the user issues a command to pause a particular channel. This command can be entered by pressing the selective pause key 604 (of Fig. 6) or by making a selection via an appropriately configured user interface display. As indicated by step 1104, the issuance of a pause command prompts the pause module (124, 144) to record a bookmark which designates the paused location. This also prompts the pause module (124, 144) to display a frame that represents the juncture in the program when the user issued the selective pause command (that is, this frame is presented providing that the user is currently "tuned" to the channel that has been paused). In the event that this frame coincides with information that has low information content, then one of the mechanisms described in connection with Fig. 9 can be used to jump ahead (or back) from the paused location to select a frame having more meaningful content. Step 1106 indicates the above procedure can be repeated a number of times such that the user can create multiple bookmarks in multiple respective programs (or in the same program).

In step 1202 of Fig. 12, the user issues a command to remove the pause state from a previously paused channel. This command can be entered by pressing the pause channel key 604 again, by pressing the play key 610, or by pressing the go live key 612, or by making a selection via an appropriately configured user interface display. As indicated by step 1204, the issuance of a resume command prompts the pause module (124, 144) to release the pause state, either by continuing the presentation of a program from its paused location or by bringing the program entirely up to date (e.g., in response to the issuance of a go live command). Step 1206 indicates that the above procedure can be repeated a number of times.

(Generally, with respect to Section C as a whole, recall that a unicast point-to-point model of program distribution is being applied here; thus, there is no presentation of program content, including still frames, unless the user specifically requests this program content, e.g., by advancing to the channel that provides such content.)

### C.2. Pause All Mode

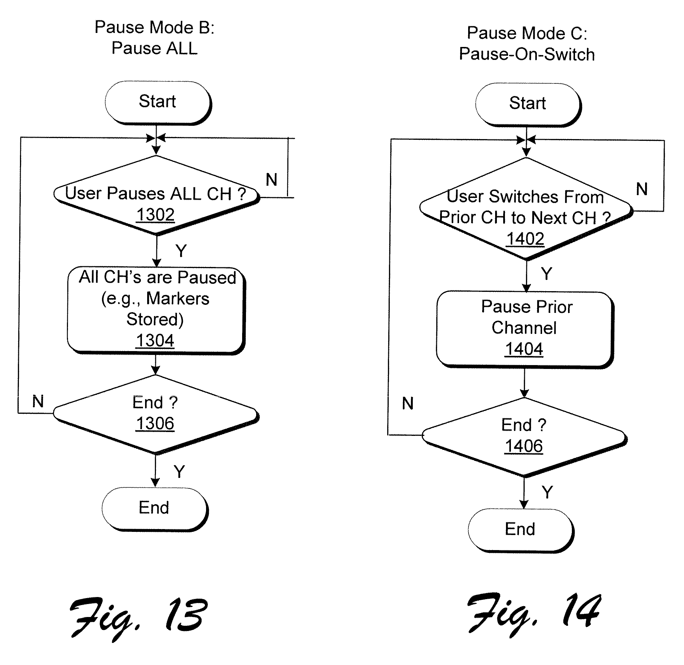

Fig. 13 shows the behavior of the "pause all" mode from the standpoint of the user's experience in interacting with the client processing device 104. In particular, Fig. 13 shows what happens when the user issues a pause all command.

In step 1302 of Fig. 13, the user issues a command to pause all of the channels. This command can be entered by pressing the pause all key 606 (of Fig. 6) or by making a selection via an appropriately configured user interface display. As indicated by step 1304, the issuance of the pause all command prompts the pause module (124, 144) to record a bookmark for each of the channels that the user has access to (or to record a single bookmark that applies to each of the channels). This also prompts the pause module (124, 144) to present still frames for each of the channels that have been paused; these still frames correspond to the frames that were being presented on the respective channels when the user issued the pause all command. More specifically, if the user surfs among a plurality of channels subject to the pause all state, the pause module (124, 144) is configured to present the above-described still frames. Step 1306 indicates that the above procedure can be repeated a number of times.

The prior procedure of Fig. 12 can be used to resume programs that were paused in the above-described manner. In step 1202 of Fig. 21, the user can issue a command to resume one or more paused programs. This command can be entered by pressing the pause all key 606 again, by pressing the selective pause key 604 or play key 612 for individual channels, or by pressing the go live key 610, or by making a selection via an appropriately configured user interface display. As indicated by step 1204, the issuance of a resume command prompts the pause module (124, 144) to release the pause all state on one or more of the channels, either by continuing the presentation of the programs from the locations at which they were paused or by bringing the programs entirely up to date (e.g., in response to the issuance of a go live command). Step 1206 indicates that the above procedure can be repeated a number of times.

### C.3. Pause-On-Switch Mode

Fig. 14 shows the behavior of the pause-on-switch mode from the standpoint of the user's experience in interacting with the client processing device 104. In particular, Fig. 14 shows what happens when the user switches channels when the pause-on-switch mode is active.

In step 1402 of Fig. 14, the user issues a command to switch channels while the pause-on-switch mode is active. (The pause-on-switch mode can be activated by pressing the pause-on-switch 608 or by making a selection via an appropriately configured user interface display.) The user may change channels via the conventional up/down channel keys 614 or via the numeric keys 616. As indicated by step 1404, the issuance of a channel switch command while the pause-on-switch mode is active prompts the pause module (124, 144) to record a bookmark for the program that the user is switching away from. This also prompts the pause module (124, 144) to present a still frame for the paused program corresponding to the pause position. Step 1406 indicates that the above procedure can be repeated a number of times such that the user can create multiple bookmarks in multiple respective programs in the course of changing channels (e.g., in the course of channel "surfing").

The prior procedure of Fig. 12 can be used to resume programs that were paused in the above-described manner. In step 1202 of Fig. 12, the user issues a command to remove the pause state from a channel that the user has previously paused via the pause-on-switch mode. This command can be entered by simply returning to the previously paused program, by pressing the selective pause key 604 or play key 610 for a paused program, or by pressing the go live key 610, or by making a selection via an appropriately configured user interface display. As indicated by step 1204, the issuance of a resume command prompts the pause module (124, 144) to release the pause state of one or more paused channels, either by continuing the presentation of the programs from their paused locations or by bringing the programs entirely up to date (e.g., in response to the issuance of a go live command). Step 1206 indicates that the above procedure can be repeated a number of times.

### C.4. Operations Center Processing of Pause Commands

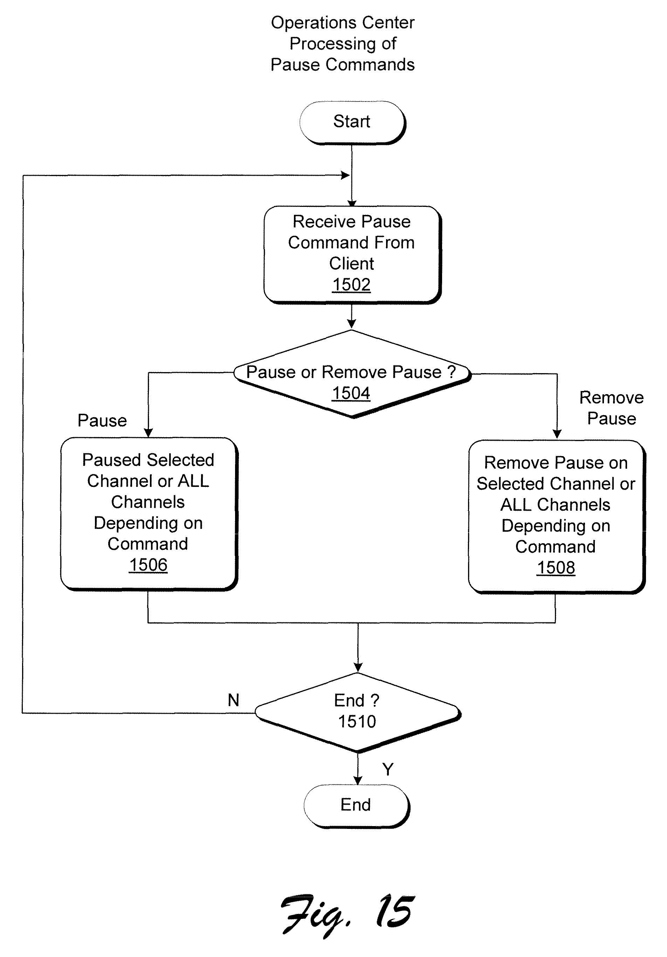

Finally, Fig. 15 shows a procedure that explains how the operations center 102 can process the various pause and resumption commands created in the manner described above. In step 1502, the operations center 102 receives a command to pause one or more channels from a user who is interacting with the client processing device 104, or to resume the presentation of one or more previously paused programs. If a pause command was issued (as determined in step 1504), step 1506 involves pausing a selected channel or pausing all of the channels. This can be achieved by storing one or more pause positions in the pause locations store 126. Step 1506 also involves issuing appropriate instructions to the client device 104 to effectuate the desired pause behavior (e.g., by freezing a frame corresponding to the paused position or positions). If, on the other hand, a resumption command was issued (as determined in step 1504), step 1508 involves removing the pause state of one or more previously paused channels. This can be achieved by deleted the bookmarks and commanding the dissemination module 122 to continue presentation of the stored programs.

In closing, a number of examples will be presented in this disclosure in the alternative (e.g., case A or case B). In addition, this disclosure encompasses those cases which combine alternatives in a single implementation (e.g., case A and case B), even though this disclosure may not expressly mention these conjunctive cases in every instance.

More generally, although the invention has been described in language specific to structural features and/or methodological acts, it is to be understood that the invention defined in the appended claims is not necessarily limited to the specific features or acts described. Rather, the specific features and acts are disclosed as exemplary forms of implementing the claimed invention.

## Claims

1. A method for pausing the presentation of programs, comprising:
storing programs in a content store;
receiving a user's instructions to pause plural programs stored in the content store at the same time;
creating plural bookmarks, in response to the pause instructions, respectively associated with the plural programs, the plural bookmarks identifying positions in the respective plural programs at which the respective plural programs are to be paused; and
pausing the presentation of the respective plural programs based on the respective plural bookmarks.

2. The method according to claim 1, wherein at least one of the plural programs is a live program that is stored as it is received.

3. The method according to claim 1, wherein at least one of the plural programs is a pre-recorded program.

4. The method according to claim 1, wherein the operations center groups the programs into a set of channels.

5. The method according to claim 1, wherein the receiving of instructions involves receiving a command to simultaneously pause the plural programs at a same position, and the creating of the plural bookmarks involves creating the plural bookmarks to designate the same position for the plural programs.

6. The method according to claim 1, wherein the receiving of instructions involves receiving a series of successive commands to switch among programs being presented on different respective channels, and the creating of the plural bookmarks involves, upon each switch command, creating a bookmark for a program that has been switched away from.

7. The method according to claim 1, further including:
receiving a resumption command to resume the presentation of at least one of the paused program; and
resuming the presentation of said at least one paused program in response to the resumption command.

8. The method according to claim 7, wherein the resuming of the presentation involves resuming the presentation of said at least one paused program from a position at which said at least one paused program was paused.

9. The method according to claim 7, wherein the resuming of the presentation involves resuming the presentation of said at least one paused program from a position that represents a current playing position of said at least one paused program.

10. The method according to claim 1, further including storing the plural bookmarks at a pause locations store located at an operations center site.

11. The method according to claim 10, wherein the storing of the plural bookmarks involves storing, in the pause locations store, multiple bookmarks entered by multiple respective users operating multiple respective different client processing devices.

12. The method according to claim 1, further including storing the plural bookmarks at a local site associated with a client processing device used to issue the instructions.

13. The method according to claim 1, wherein each of the plural bookmarks has at least one attribute associated therewith which determines the behavior of a corresponding bookmark.

14. The method according to claim 13, wherein said at least one attribute defines whether the corresponding bookmark applies to a single computer processing device used to enter the pause instructions or multiple computer processing devices associated with a user.

15. The method according to claim 1, wherein the instructions are entered using a pause input mechanism disposed on at least one input control mechanism.

16. The method according to claim 1, wherein the instructions are entered by interacting with at least one user interface presentation.

17. A computer readable medium including machine readable instructions for implementing the storing, receiving, creating, and pausing of claim 1.

18. A system for pausing the presentation of programs, comprising:
a content store for storing programs;
logic configured to receive a user's instructions to pause plural programs stored in the content store at the same time;
logic configured to create plural bookmarks, in response to pause instructions, respectively associated with the plural programs, the plural bookmarks identifying positions in the respective plural programs at which the respective plural programs are to be paused; and
logic configured to pause the presentation of the respective plural programs based on the respective plural bookmarks.

19. The system according to claim 18, wherein the logic for receiving instructions is configured to receive a command to simultaneously pause the plural programs at a same position, and the logic for creating the plural bookmarks is configured to create the plural bookmarks to designate the same position for the plural programs.

20. The system according to claim 18, wherein the logic for receiving instructions is configured to receive a series of successive commands to switch among programs being presented on different respective channels, and the logic for creating the plural bookmarks is configured to, upon each switch command, create a bookmark for a program that has been switched away from.

21. The system according to claim 18, further including:
logic configured to receive a resumption command to resume the presentation of at least one of the paused programs; and
logic configured to resume the presentation of said at least one paused program in response to the resumption command.

22. The system according to claim 21, wherein the logic for resuming the presentation is configured to resume the presentation of said at least one paused program from a position at which said at least one paused program was paused.

23. The system according to claim 21, wherein the logic for resuming the presentation is configured to resume the presentation of said at least one paused program from a position that represents a current playing position of said at least one paused program.

24. The system according to claim 18, further including a pause locations store located at an operations center, wherein the plural bookmarks are stored in the pause locations store.

25. The system according to claim 24, wherein the logic for storing is configured to store, in the pause locations store, multiple bookmarks entered by multiple respective users operating multiple respective different client processing devices.

26. The system according to claim 18, further including a client processing device for entering the pause instructions, wherein the plural bookmarks are stored in a local store associated with the client processing device.

27. The system according to claim 18, wherein each of the plural bookmarks has at least one attribute associated therewith which determines the behavior of a corresponding bookmark.

28. The system according to claim 27, wherein said at least one attribute defines whether the corresponding bookmark applies to a single computer processing device used to enter the instructions or multiple computer processing devices associated with a user.

29. The system according to claim 18, wherein the pause instructions are received from a client processing device over a TCP/IP network.

30. A computer readable medium including machine readable instructions for implementing the logic for storing, logic for receiving, logic for creating, and logic for pausing of claim 18.

31. A method for pausing the presentation of a program, comprising:
storing plural programs in a content store;
receiving an entered pause command to pause at least one of the programs according to one of multiple pause modes;
creating a bookmark, in response to the pause command, that reflects a predetermined position within said at least one program at which said at least one program is to be paused; and
pausing the presentation of said at least one program based on the bookmark,
wherein the multiple pause modes include at least one of:
a pause all mode which prompts the pausing of all of the plural programs, including said at least one program; and
a pause-on-switch mode which prompts the pausing of said at least one program when a user switches from said at least one program to a new program, and prompts the pausing of the new program when the user switches from the new program to yet another program.

32. A computer readable medium including machine readable instructions for implementing the storing, receiving, creating, and pausing of claim 31.

33. A system for pausing the presentation of a program, comprising:
logic configured to store plural programs in a content store;
logic configured to receive an entered pause command to pause at least one of the programs according to one of multiple pause modes;
logic configured to create a bookmark, in response to the pause command, that reflects a predetermined position within said at least one program at which said at least one program is to be paused; and
logic configured to pause the presentation of said at least one program based on the bookmark,
wherein the multiple pause modes include at least one of:
a pause all mode which prompts the pausing of all of the plural programs, including said at least one program; and
a pause-on-switch mode which prompts the pausing of said at least one program when a user switches from said at least one program to a new program, and prompts the pausing of the new program when the user switches from the new program to yet another program.

34. A computer readable medium including machine readable instructions for implementing the logic for storing, logic for entering, logic for creating, and logic for pausing of claim 33.
